# EUROPÄISCHE PATENTANMELDUNG

(11) **EP 2 532 514 A1**
(43) Veröffentlichungstag der Anmeldung: **12.12.2012**
(21) Anmeldenummer: 11004755.2
(22) Anmeldetag: 10.06.2011
(51) Int. Cl.: B32B 27/10, B65D 81/00, B65D 85/80

(54) **Verpackungslaminat**

(71) Anmelder: Amcor Flexibles Kreuzlingen Ltd., 8280 Kreuzlingen (CH)
(72) Erfinder: Rothenbühler, Martin, 3550 Langnau i.E. (CH)
(74) Vertreter: Gernet, Samuel Andreas

(57) **Zusammenfassung**

Bei einem Verpackungslaminat (10) aus Papier (12) und einem einseitig metallisierten Kunststofffilm (14) mit verbesserter Sauerstoff- und Aromabarriere ist das Papier (12) über eine wenigstens ein wasserbasiertes Silikat enthaltende Kaschiermittelschicht (18) mit der die Metallisierung (16) aufweisenden Seite des Kunststofffilms (14) verbunden.

## Beschreibung

Die Erfindung betrifft ein Verpackungslaminat aus Papier und einem einseitig metallisierten Kunststofffilm mit verbesserter Sauerstoff- und Aromabarriere, wobei das Papier über eine Kaschiermittelschicht mit der die Metallisierung aufweisenden Seite des Kunststofffilms verbunden ist.

Verpackungslaminate aus Papier und einem Kunststofffilm sind bekannt. Das Papier bildet bei einer aus dem Laminat hergestellten Verpackung die gegebenenfalls bedruckte Aussenseite. Der die Innenseite bildende Kunststofffilm dient zur Siegelung gegen die Innenseite des gleichen oder eines unterschiedlichen Laminats. Als Kaschiermittel werden herkömmliche Kleber, beispielsweise auf Polyurethan- oder Acrylatbasis, verwendet. Zwischen dem Papier und dem Kunststofffilm ist üblicherweise zur Verminderung des Durchtritts von Sauerstoff und Aromastoffen durch das Laminat eine entsprechende Barriereschicht angeordnet. Zur Erzielung einer hohen Barrierewirkung ist die Anordnung einer Metallfolie, insbesondere einer Aluminiumfolie, bekannt. Eine herkömmliche kostengünstige Metallisierung, beispielsweise eine Metallisierung mit Aluminium, bietet nur einen begrenzten Schutz gegen den Durchtritt von Sauerstoff und Aromen. Für einen optimalen Schutz ist deshalb neben der Metallisierung zumindest eine weitere, mit zusätzlichen Kosten verbundene Barriereschicht, wie z. B. ein Film aus einem Ethylen-Vinylalkohol (EVOH) -Copolymer, erforderlich.

Der Erfindung liegt die Aufgabe zugrunde, ein kostengünstiges Verpackungslaminat aus Papier und einem Kunststofffilm mit guter Sauerstoff- und Aromabarriere bereitzustellen.

Zur erfindungsgemässen Lösung der Aufgabe führt bei einem Verpackungslaminat der eingangs genannten Art, dass die Kaschiermittelschicht wenigstens ein wasserbasiertes Silikat enthält.

Als Papier geeignet sind alle Papierqualitäten. Das Papier kann unbedruckt oder bedruckt sein.

Beispiele von zur Herstellung des erfindungsgemässen Verpackungslaminates geeigneten, wässrigen Silikatlösungen enthalten Natriumsilikat, Kaliumsilikat, Lithiumsilikat, Ammoniumsilikat oder Tetramethylammoniumsilikat allein oder als Mischung von wenigstens zwei der vorgenannten Silikate. Die Silikatlösungen können weitere, mit den eingesetzten Silikaten kompatible Verbindungen enthalten. Mit diesen weiteren Verbindungen soll vor allem der durch den Einsatz der Silikate auftretenden Sprödigkeit der Kaschierschicht entgegenwirken. Ziel ist es, die Flexibilität der Kaschierschicht durch Zusätze von mit wasserbasierten Silikaten mischbaren Substanzen zu erhalten. Geeignete Zusätze sind Feuchthaltemittel, wie
Polyole, z.B. Mannitol oder Sorbitol,
Monosacharide, z. B. Glucose oder Fructose,
Disacharide, z. B. Sacharose oder Laktose,
Oligosacharide (3 bis 10 Monosacharide), z.B. Melezitose,
Polysacharide mehr als 10 Monosacharide), z. B. Amylose oder Cellulose, cyclische Oligosacharide, z.B. Cyclodextrin,
sowie alle vorstehend genannten, modifizierten Sacharide, z. B. Glucosamin, Fructose-1,6-bisphosphat oder Chitin,
Salze organischer Säuren, z.B. Magnesiumacetat oder Kaliumcitrat,
Salze anorganischer Säuren, z.B. Lithiumchlorid oder Ammoniumphosphat.

Die Flexibilität der Kaschierschicht kann auch mit anderen, nicht notwendigerweise als Feuchthaltemittel bekannten Zusätzen erzielt werden, wie Dispersionen oder lösliche Harze von Ethylen-Vinylacetat (EVA)-Copolymeren, Polyethylenimin (PEI) oder Polyurethan (PU), oder Acryldispersionen.

Eine bevorzugte Metallisierung besteht aus Aluminium oder einer Aluminiumlegierung.

Der einseitig mit der Metallisierung versehene Kunststofffilm kann ein beliebiger, bevorzugt gegen sich selbst siegelbarer Film sein. Bevorzugte Kunststofffilme sind Filme aus nicht, mono- oder biaxial gerecktem Polypropylen (PP, OPP), Filme aus teilkristallinem Polyethylenterephthalat (PETP), mono- oder biaxial gereckte Filme aus Polyamid (OPA) sowie Filme aus Polylactid (PLA), Cyclo-Olefin-Copolymeren (COC) und Cellophan.

Die erfindungsgemässe Verwendung wasserbasierter Silikate als Kaschiermittel führt neben einer ausgezeichneten Haftung sowohl am Papier als auch am metallisierten Kunststofffilm zu einer wesentlicher Verbesserung der Sauerstoff- und Aromabarriere des Laminats.

Bevorzugt weisen das Papier eine Dicke von 10 bis 150 µm und der Kunststofffilm eine Dicke von 1 bis 500 µm auf.

Das erfindungsgemässe Verpackungsmaterial eignet sich insbesondere zur Herstellung von gesiegelten Beuteln zur Verpackung von gegen Feuchte empfindlichen Lebensmitteln und technischen Produkten.

Bei einem zur kontinuierlichen Herstellung des erfindungsgemässen Laminats geeigneten Verfahren wird eine Papierbahn von einer ersten Rolle abgewickelt, in einer Auftragseinrichtung mit dem Kaschiermittel beschichtet und einer Laminiereinrichtung zugeführt. Gleichzeitig wird ein metallisierter Kunststofffilm von einer zweiten Rolle abgewickelt und direkt der Laminiereinrichtung zugeführt. Die Papierbahn und der metallisierte Kunststofffilm werden in der Laminiereinrichtung zu dem Laminat verbunden. Das aus der Laminiereinrichtung austretende Laminat durchläuft eine Trocknungseinrichtung und wird anschliessend auf eine dritte Rolle aufgewickelt. Die Beschichtung mit Kaschiermittel kann auch auf der metallisierten Seite des Kunststofffilms erfolgen. Die Auftragung des Kaschiermittels kann mit allen im Stand der Technik bekannten Verfahren, wie z. B. durch Bedrucken oder durch Aufsprühen, erfolgen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: den Schichtaufbau eines Verpackungslaminats;
- Fig. 2: eine auf dem Verpackungslaminat von Fig. 1 aufbauende zweite Ausführungsform;
- Fig. 3: eine auf dem Verpackungslaminat von Fig. 1 aufbauende dritte Ausführungsform;
- Fig. 4: einen Verfahrensablauf zur Herstellung des in Fig. 1 gezeigten Verpackungslaminates.

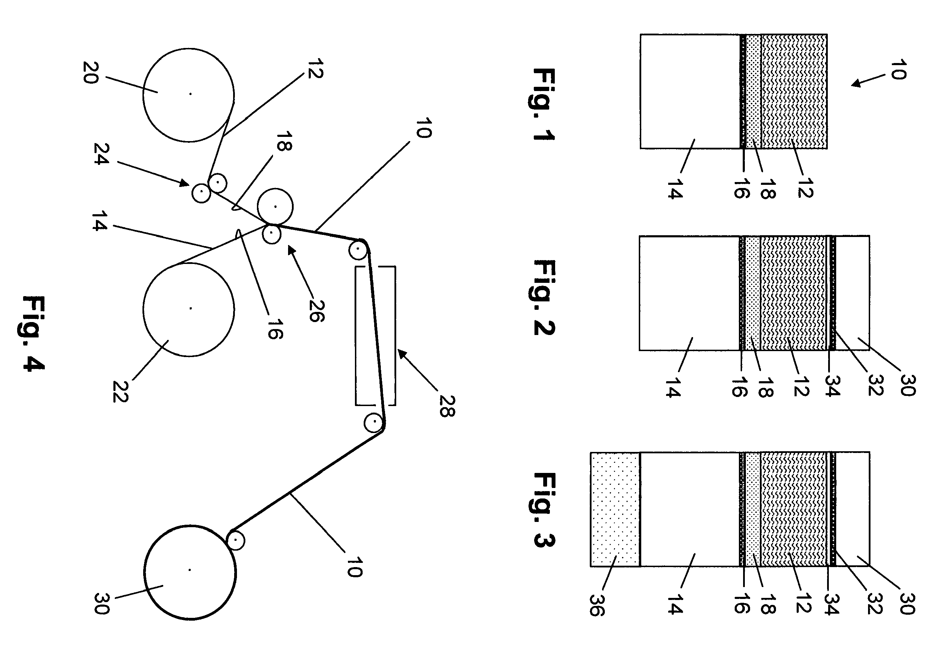

Ein Verpackungslaminat 10 weist gemäss Fig. 1 ein Papier 12 und einen einseitig mit einer Metallisierung 16 beschichteten Kunststofffilm 14 auf. Das Papier 12 und der metallisierte Kunststofffilm 14 sind über eine zwischenliegende Kaschierschicht 18 zu dem Laminat 10 verbunden. Hierbei ist die Metallisierung 16 auf der gegen das Papier 12 kaschierten Seite des Kunststofffilms 14 angeordnet.

Bei einer in Fig. 2 dargestellten, auf dem Verpackungslaminat von Fig. 1 aufbauenden zweiten Ausführungsform ist ein weiterer Kunststofffilm 30 aus beispielsweise PETP mit einer Bedruckung 32 versehen und mittels einer Kleberschicht 34 mit dem Papier 12 verbunden.

Bei einer in Fig. 3 dargestellten, auf dem Verpackungslaminat von Fig. 1 aufbauenden dritten Ausführungsform ist die Papierseite gemäss Fig. 2 ausgestaltet. Zusätzlich ist die metallisierte Kunststofffolie 14 mit einer weiteren, als Siegelschicht vorgesehenen Kunststoffschicht 36 belegt. Diese weitere Kunststoffschicht kann durch Extrusionsbeschichten oder Laminieren mit der Kunststoffschicht 14 verbunden sein.

Fig. 4 zeigt ein zur Herstellung des in Fig. 1 dargestellten Verpackungslaminates 10 geeignetes, aus dem Stand der Technik bekanntes und nachfolgend beschriebenes Verfahren.

Das in Bahnform vorliegende Papier 12 wird von einer ersten Rolle 20 abgewickelt und in einer nachfolgenden Auftragstation 24 einseitig mit der Kaschierschicht 18 beschichtet. Gleichzeitig wird von einer zweiten Rolle 22 der in Bahnform vorliegende und vorgängig bereits einseitig metallisierte Kunststofffilm 14 abgewickelt und zusammen mit dem mit der Kaschierschicht 18 versehenen Papier 12 einer Laminierstation 26 zugeführt und miteinander verbunden. Die Metallisierung 16 bildet hierbei die gegen das Papier 12 kaschierte Seite des Kunststofffilms 14. Das in der Laminierstation 26 gebildete Verpackungslaminat 10 wird nachfolgend zum Trocknen der Kaschierschicht 18 durch eine Trocknungsstation 28 geführt und anschliessend auf eine dritte Rolle 30 gewickelt.

Die Überlegenheit der erfindungsgemässen Verpackungslaminates mit einer ein wasserbasiertes Silikat enthaltenden Kaschiermittelschicht gegenüber einem nur metallisierten Kunststofffilm bezüglich der Barrierewirkung gegenüber Sauerstoff und Wasserdampf wird durch die in der nachstehenden Tabelle zusammengestellten Messergebnisse der genannten Eigenschaften untermauert. Die Haftung zwischen dem metallisierten Kunststofffilm 14 und dem Papier 12 ist ausgezeichnet.

**Tabelle: Sauerstoffbarriere (OTR, oxygen transfer rate) bei 23°C und 75% rH in cm³/(m² . 24 h · bar) und Wasserdampfbarriere (WVTR, water vapor transfer rate) bei 38°C und 80% rH in g/(m² . 24 h)**

| **Struktur** | **OTR** | **WVTR** |
|---|---|---|
| M-bPP 28 µm (Ausgangsmaterial) | 57.5 | 0.3 |
| M-OPP 20 µm | 45 | - |
| Papier 50 µm / Wasserglas 5.8 % / M-OPP 20 µm | 0.1 | - |
| Papier 50 µm / Wasserglas 4.3 % / M-OPP 20 µm | 0.3 | - |
| Papier 50 µm / (90% Wasserglas 10% PEI) 4.3 µm / M-OPP 20 µm | 0.3 | - |
| Papier 50 µm / (90% Wasserglas 10% Zucker) 6.5 µm / M-bPP 28 µm | 0.3 | - |
| Paper 50 µm / (90% Wasserglas 10% Zucker) 6.5 µm / M-bPP 28 µm | 1.19 | 0.85 |

| | | |
|---|---|---|
| M-bPP mit Aluminium metallisierter geblasener Polypropylenfilm M-OPP mit Aluminium metallisierter biaxial gereckter Polypropylenfilm PEI Polyethylenimin | | |

## Patentansprüche

1. Verpackungslaminat aus Papier (12) und einem einseitig metallisierten Kunststofffilm (14) mit verbesserter Sauerstoff- und Aromabarriere, wobei das Papier (12) über eine Kaschiermittelschicht (18) mit der die Metallisierung (16) aufweisenden Seite des Kunststofffilms (14) verbunden ist,
**dadurch gekennzeichnet, dass**
die Kaschiermittelschicht (18) wenigstens ein wasserbasiertes Silikat enthält.

2. Verpackungslaminat nach Anspruch 1, **dadurch gekennzeichnet, dass** der Kunststofffilm (14) ein nicht, mono- oder biaxial gereckter Film aus Polypropylen (OPP), ein Film aus teilkristallinem Polyethylenterephthalat (PETP), ein mono- oder biaxial gereckter Film aus Polyamid (OPA) oder ein Film aus Polylactid (PLA), Cyclo-Olefin-Copolymeren (COC) oder Cellophan ist.

3. Verpackungslaminat nach Anspruch 1 oder 2, **dadurch gekennzeichnet, dass** der Kunststofffilm (14), vorzugsweise gegen sich selbst, siegelbar ist.

4. Verpackungslaminat nach Anspruch 1 oder 2, **dadurch gekennzeichnet, dass** der Kunststofffilm (14) mit einer Siegelschicht (36) extrusionsbeschichtet oder laminiert ist.

5. Verpackungslaminat nach einem der Ansprüche 1 bis 4, **dadurch gekennzeichnet, dass** das Papier (18) mittels einer Kleberschicht (32) mit einem gegebenenfalls mit einer Bedruckung (34) versehenen weiteren Kunststofffilm (30) verbunden ist.

6. Verpackungslaminat nach einem der Ansprüche 1 bis 5, **dadurch gekennzeichnet, dass** die Kaschiermittelschicht (18) Natriumsilikat, Kaliumsilikat, Lithiumsilikat, Ammoniumsilikat oder Tetramethylammoniumsilikat allein oder eine Mischung von wenigstens zwei der vorgenannten Silikate enthält oder aus den genannten Materialien besteht.

7. Verpackungslaminat nach Anspruch 6, **dadurch gekennzeichnet, dass** die Kaschiermittelschicht (18) Polyole, Monosacharide, Disacharide, Oligosacharide, Polysacharide, cyclische Oligosacharide, Salze von organischen oder anorganischen Säuren, Dispersionen oder lösliche Harze von Ethylen-Vinylacetat (EVA)-Copolymeren, Polyethylenimin (PEI) oder Polyurethan (PU), oder Acryldispersionen, alle vorstehend genannten Substanzen einzeln oder in beliebiger Mischung, enthält.

8. Verpackungslaminat nach einem der Ansprüche 1 bis 7, **dadurch gekennzeichnet, dass** die Metallisierung (16) aus Aluminium oder einer Aluminiumlegierung besteht

9. Verpackungslaminat nach einem der Ansprüche 1 bis 8, **dadurch gekennzeichnet, dass** das Papier eine Dicke von 10 bis 150 µm und der Kunststofffilm eine Dicke von 1 bis 500 µm aufweisen.
